# EUROPEAN PATENT SPECIFICATION

(11) **EP 2 400 382 B1**
(45) Date of publication and mention of the grant of the patent: **29.11.2017**
(21) Application number: 09840290.2
(22) Date of filing: 20.08.2009
(51) Int. Cl.: G06F 3/06, G06F 12/00, G06F 11/10

(54) **STORAGE SYSTEM**
SPEICHERSYSTEM
SYSTÈME DE STOCKAGE

(30) Priority: 17.02.2009 JP 2009033438
(43) Date of publication of application: 28.12.2011
(73) Proprietor: NEC Corporation, Tokyo 108-8001 (JP); NEC Solution Innovators, Ltd., Tokyo 136-8627 (JP)
(72) Inventor: NODA, Kenji, Tokyo 108-8001 (JP); TOKUTAKE, Hiroyuki, Toky 136-8627 (JP)
(74) Representative: Vossius & Partner Patentanwälte Rechtsanwälte mbB
(86) International application number: PCT/JP2009/003964
(87) International publication number: WO 2010/095183

(56) References cited:
- EP-A2- 0 462 917
- JP-A- 9 146 717
- JP-A- 2000 200 157
- JP-A- 2006 236 001
- US-A1- 2003 120 869
- US-A1- 2006 174 157
- US-A1- 2008 010 507
- US-B2- 6 990 611

## Description

### TECHNICAL FIELD

The present invention relates to a storage system, and specifically, relates to a storage system that distributes and stores data into a plurality of storage devices.

### BACKGROUND ART

In recent years, as computers have developed and become popular, various kinds of information are put into digital data. As a device for storing such digital data, there is a storage device such as a magnetic tape and a magnetic disk. Because data to be stored has increased day by day and the amount thereof has become huge, a high-capacity storage system is required. Moreover, it is required to keep reliability while reducing the cost for storage devices. In addition, it is required that data can easily be retrieved later. As a result, such a storage system is desired that is capable of automatically realizing increase of the storage capacity and performance thereof, that eliminates a duplicate of storage to reduce the cost for storage, and that has high redundancy.

Under such circumstances, in recent years, a content address storage system has been developed as shown in Patent Document 1. This content address storage system distributes data and stores into a plurality of storage devices, and specifies a storing position in which the data is stored based on a unique content address specified corresponding to the content of the data.

To be specific, the content address storage system divides predetermined data into a plurality of fragments, adds a fragment that is redundant data thereto, and stores the plurality of fragments into a plurality of storage devices, respectively. Later, by designating a content address, it is possible to retrieve data, that is, a fragment stored in a storing position specified by the content address and restore the predetermined data before being divided, from the plurality of fragments.

Further, the content address is generated so as to be unique corresponding to the content of data. Therefore, in the case of duplicated data, it is possible to acquire data having the same content with reference to data in the same storing position. Thus, it is not necessary to separately store duplicated data, and it is possible to eliminate duplicated recording and reduce the data capacity.

On the other hand, a storage system equipped with a plurality of storage devices is required to have a structure of load balancing so as not to place more load or intensify load on some nodes. An example of such a load balancing system is a system described in Patent Document 2.

A load balancing storage system will be described in detail. A load balancing storage system has a self-repairing function of being capable of performing data restoration by itself in case of a failure because redundant data is added at the time of data storing. Moreover, the load balancing storage system has a distributed resilient data function of, at the time of determining what node a component is located in, distributing by considering the load of each node autonomously as a system.

In such a storage system, firstly, data to be stored is divided into fine data blocks. Each of the data blocks is divided more finely, plural pieces of redundant data are added thereto, and these data are stored into a plurality of nodes configuring the system. The nodes belonging to the storage system each have a data storing region called a component, and the data blocks are stored into the components. Moreover, in the storage system, load balancing is performed by the component, and exchange of data between the nodes is performed by the component. Location of the components in the respective nodes is performed autonomously by the system.

In the system as described above, in a case that the node is separated from the system because of a node failure, the component of the node is regenerated on the other node.

[Patent Document 1] Japanese Unexamined Patent Application Publication No. JP-A 2005-235171
[Patent Document 2] Japanese Unexamined Patent Application Publication No. JP-A 2008-204206

US 2006/0174157 A1 describes a dynamically expandable and contractible fault-tolerant storage system employing a virtual hot spare that is created from unused storage capacity across a plurality of storage devices.

US 2008/0010507 A1 describes solutions to reduce the time of reduced data redundancy following transient disk failures that do not corrupt the disk.

In US 6,990,611 B2, a method for recovering data from a RAID system after a transient failure is disclosed, wherein the cause of the failure is corrected and a user initiates a trust array command after the transient failure.

US 2003/0120869 A1 discloses a method for efficiently utilizing write-back caches in disk drives to build inexpensive, high-performance, reliable disk arrays, the method for preserving the ordering of writes issued to a disk array consisting of disks that support write-back caching, without requiring the frequent flushing of the write-back cache.

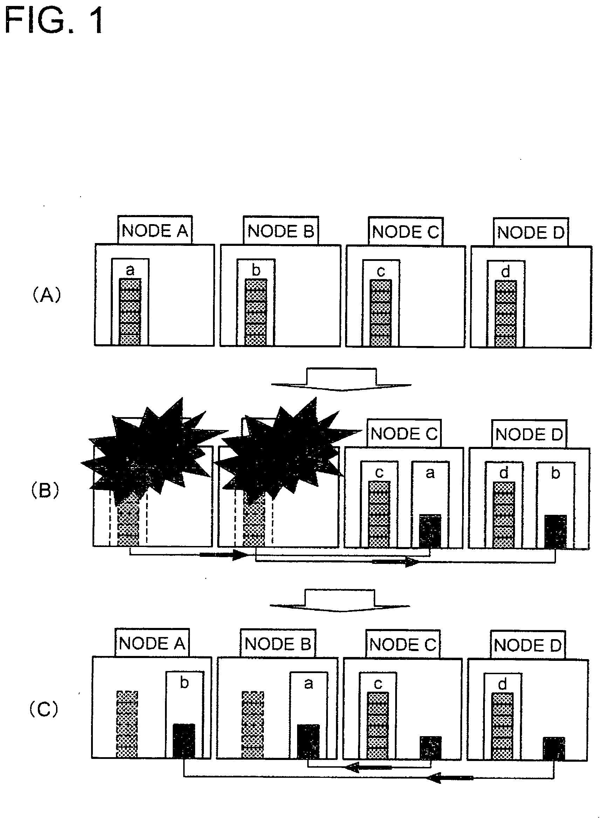

However, as described above, in a case that a storage system has a function of distributing by considering the load of each node autonomously, relocation of data may become inefficient at the time of restoration from a node fault. An example shown in Fig. 1 will be considered. Firstly, as shown in Fig. 1A, nodes A, B, C and D store components a, b, c and d, respectively. When faults occur in the nodes A and B in this status, the system regenerates the components a and b having existed on the nodes A and B as shown in Fig. 1B.

In a case that the nodes A and B participate in the system again after temporal faults as shown in Fig. 1C, it is desired that the components a and b having originally existed on the nodes A and B return to the original nodes, respectively, but the components may enter the other nodes. In a case that the components return to the original nodes, regeneration of data is not performed because the nodes hold the original data. However, in a case that the components enter the other nodes, there is a need to regenerate the data, respectively. This requires a data regeneration process in the system. Consequently, unnecessary data regeneration or movement may be performed, and relocation of data at the time of restoration becomes inefficient, which may increase load of the system and cause processing delay.

### SUMMARY

Accordingly, an object of the present invention is to provide a storage system that can increase efficiency of processing in data restoration and inhibit system load and processing delay.

In order to achieve the object, a storage system of an embodiment of the present invention includes a plurality of storing means and a data processing means configured to store data into the plurality of storing means and retrieve the data stored in the storing means.

The data processing means includes: a distribution storage processing means configured to distribute and store a plurality of fragment data composed of division data obtained by dividing storage target data into plural pieces and redundant data for restoring the storage target data, into the plurality of storing means; a data location monitoring means configured to monitor a data location status of the fragment data in the respective storing means and store data location information representing the data location status; and a data restoring means configured to, when any of the storing means is down, regenerate the fragment data having been stored in the down storing means based on the fragment data stored in the storing means other than the down storing means and store into the other storing means. The data processing means also includes a data location returning means configured to, when the down storing means recovers, return a data location of the fragment data by using the fragment data stored in the storing means having recovered so that the data location status becomes as represented by the data location information stored by the data location monitoring means.

Further, a computer program of another embodiment of the present invention is a computer program including instructions for causing an information processing device equipped with a plurality of storing means to realize a data processing means configured to store data into the plurality of storing means and retrieve the data stored in the storing means, and also realize: a distribution storage processing means configured to distribute and store a plurality of fragment data composed of division data obtained by dividing storage target data into plural pieces and redundant data for restoring the storage target data, into the plurality of storing means; a data location monitoring means configured to monitor a data location status of the fragment data in the respective storing means and store data location information representing the data location status; a data restoring means configured to, when any of the storing means is down, regenerate the fragment data having been stored in the down storing means based on the fragment data stored in the storing means other than the down storing means and store into the other storing means; and a data location returning means configured to, when the down storing means recovers, return a data location of the fragment data by using the fragment data stored in the storing means having recovered so that the data location status becomes as represented by the data location information stored by the data location monitoring means.

Further, a data processing method of another embodiment of the present invention includes, in an information processing device equipped with a plurality of storing means: storing data into the plurality of storing means and retrieving the data stored in the storing means; distributing and storing a plurality of fragment data composed of division data obtained by dividing storage target data into plural pieces and redundant data for restoring the storage target data, into the plurality of storing means; monitoring a data location status of the fragment data in the respective storing means and storing data location information representing the data location status; when any of the storing means is down, regenerating the fragment data having been stored in the down storing means based on the fragment data stored in the storing means other than the down storing means and storing into the other storing means; and when the down storing means recovers, returning a data location of the fragment data by using the fragment data stored in the storing means having recovered so that the data location status becomes as represented by the data location information having been stored.

With the configurations as described above, the present invention can realize efficient and quick data restoration.

The invention is defined according to the system of claim 1, the computer program of claim 7 and the method of claim 9.

### BRIEF DESCRIPTION OF DRAWINGS

Fig. 1 is a view showing an operation of a storage system relating to the present invention;
Fig. 2 is a block diagram showing a configuration of a whole system in a first exemplary embodiment of the present invention;
Fig. 3 is a block diagram showing a schematic configuration of the storage system disclosed in Fig. 2;
Fig. 4 is a function block diagram showing a configuration of the storage system disclosed in Fig. 3;
Fig. 5 is an explanation view for explaining an operation of the storage system disclosed in Fig. 4;
Fig. 6 is an explanation view for explaining an operation of the storage system disclosed in Fig. 4;
Figs. 7A and 7B are views each showing an example of data acquired and stored in the storage system disclosed in Fig. 4;
Figs. 8A and 8B are flowcharts each showing an operation of the storage system disclosed in Fig. 4;
Fig. 9 is a flowchart showing an operation of the storage system disclosed in Fig. 4;
Fig. 10 is a flowchart showing an operation of the storage system disclosed in Fig. 4;
Figs. 11A to 11C are views each showing an aspect of data restoration in the storage system disclosed in Fig. 4; and
Fig. 12 is a function block diagram showing a configuration of a storage system in a second exemplary embodiment of the present invention.

### EXEMPLARY EMBODIMENTS

### <First Exemplary Embodiment>

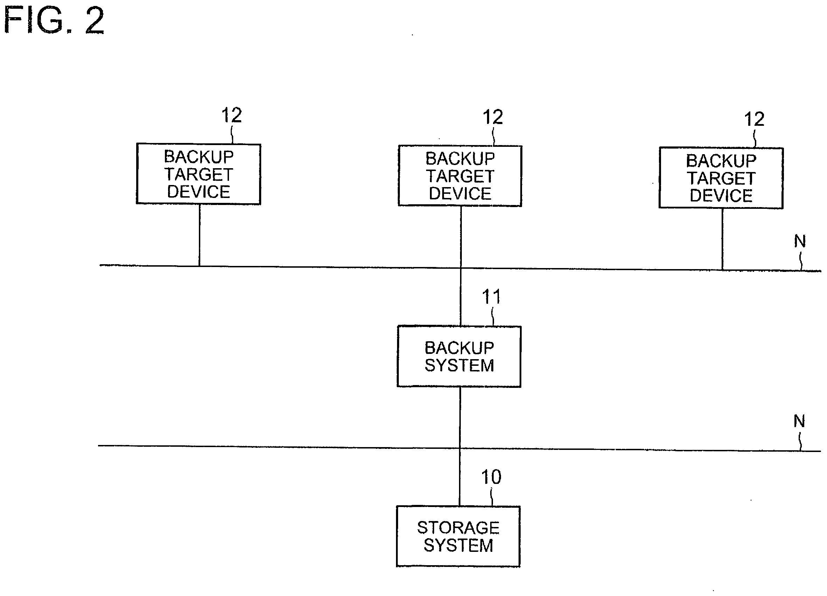

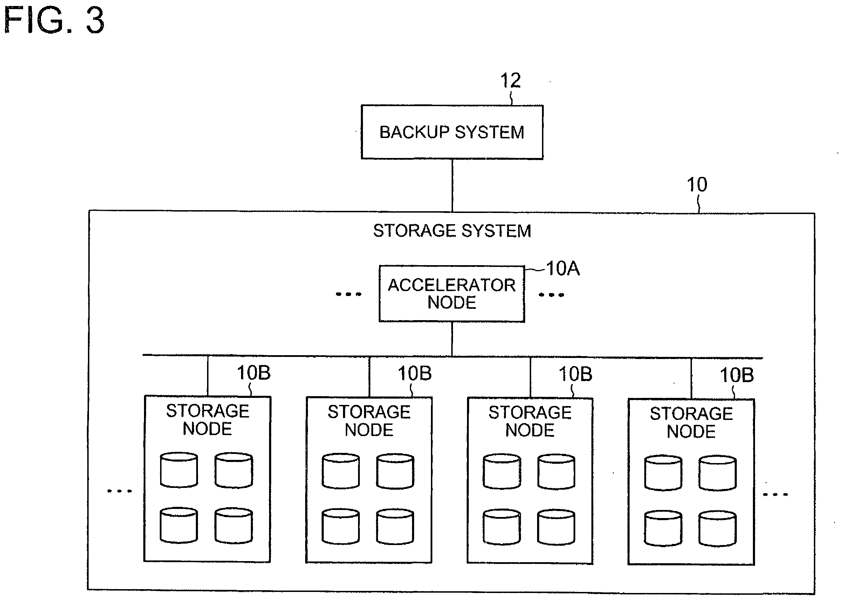

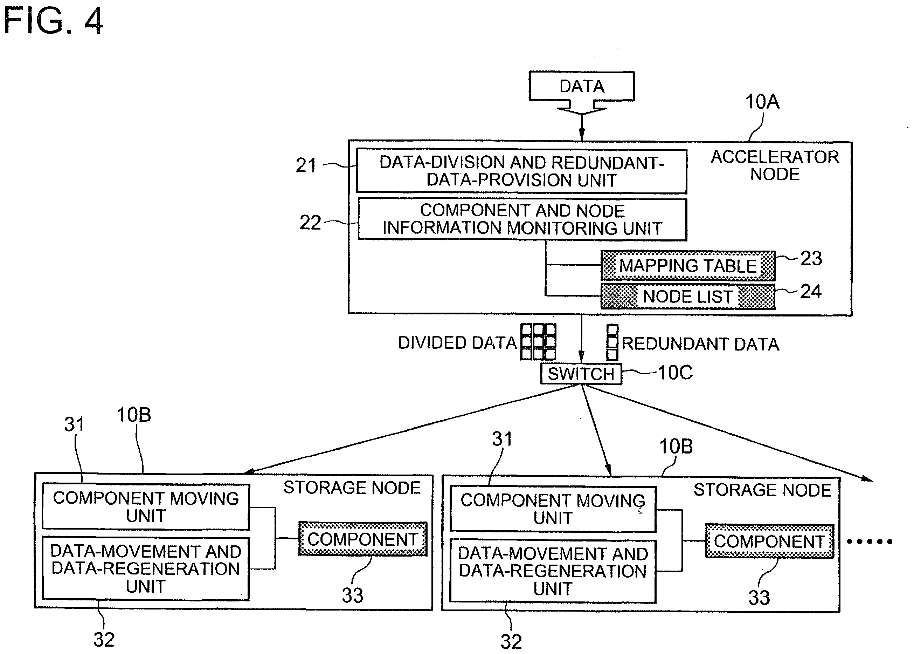

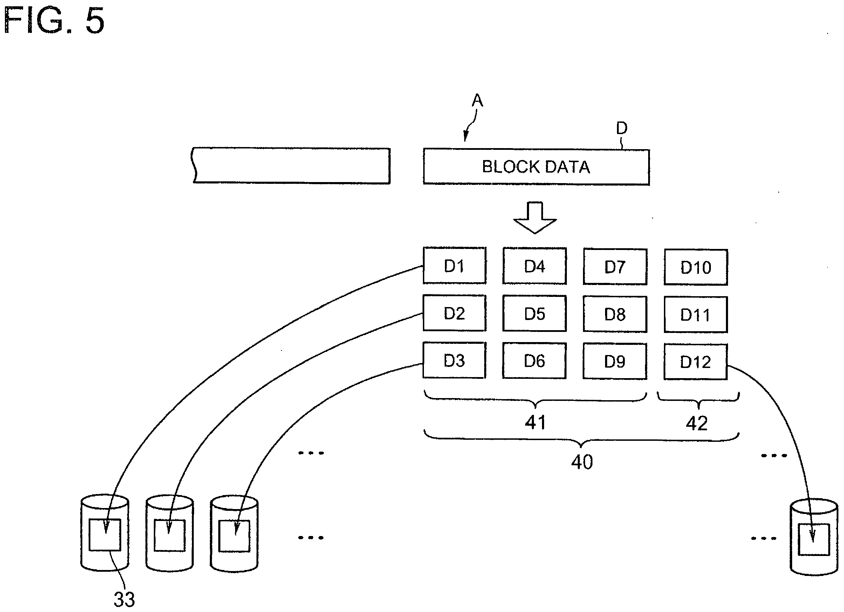

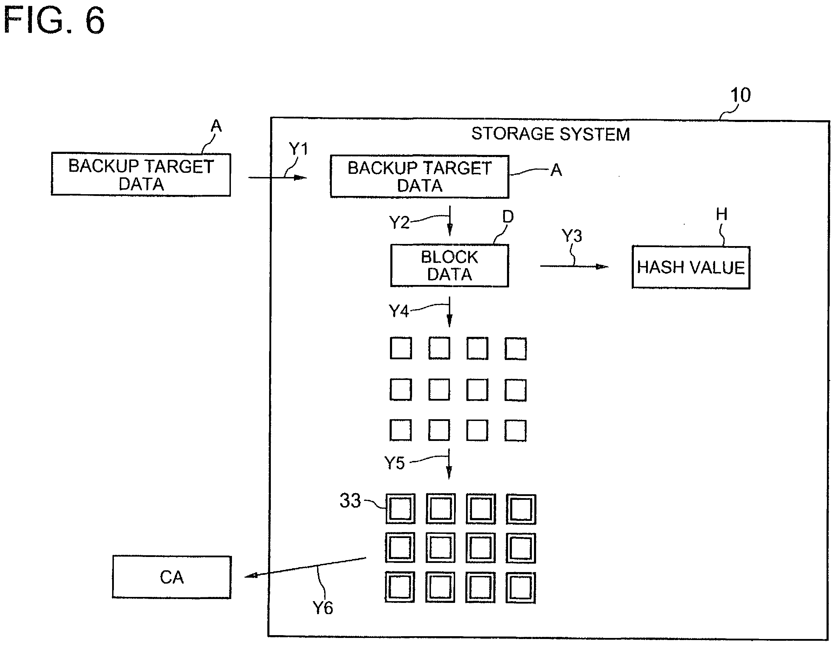

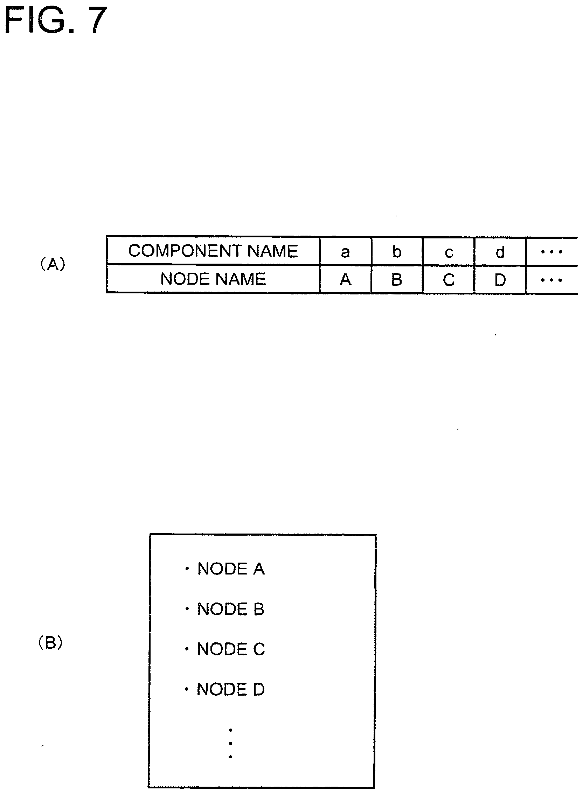

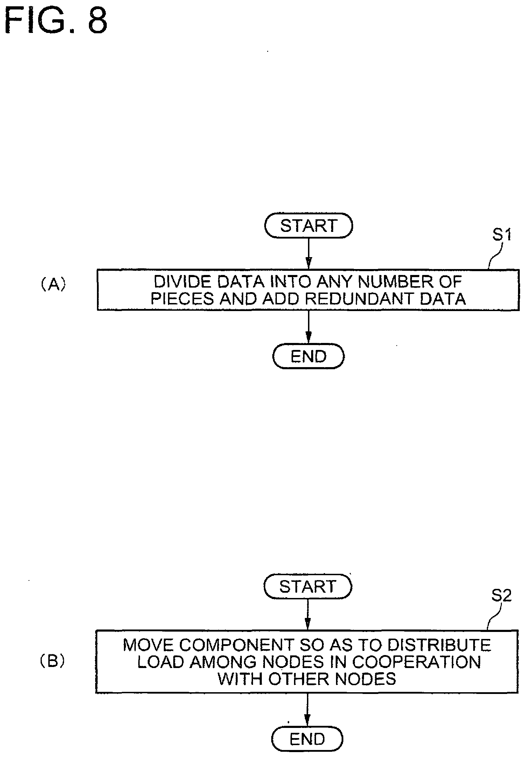

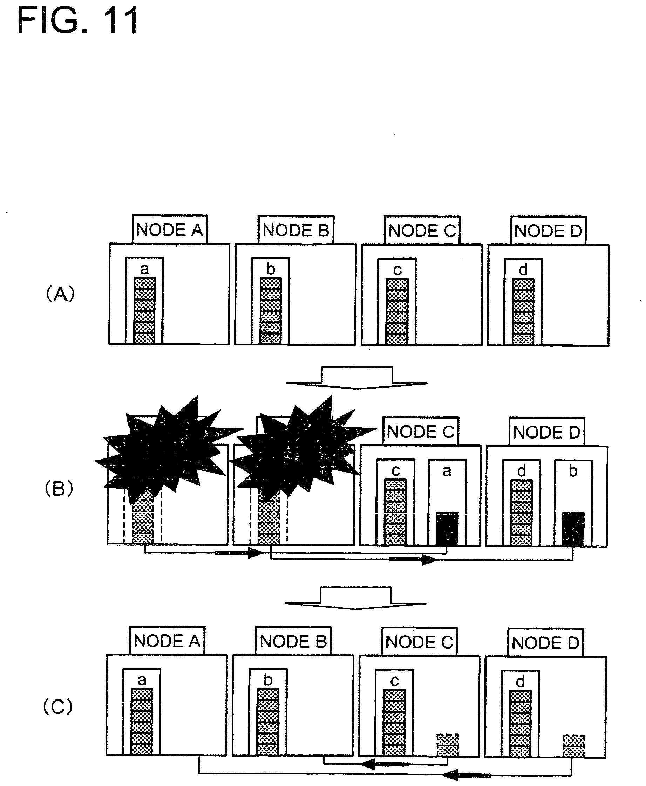

A first exemplary embodiment of the present invention will be described with reference to Figs. 2 to 11. Fig. 2 is a block diagram showing a configuration of a whole system. Fig. 3 is a block diagram schematically showing a storage system, and Fig. 4 is a function block diagram showing a configuration. Figs. 5 and 6 are explanation views for explaining an operation of the storage system. Figs. 7A and 7B are views each showing an example of data acquired and stored in the storage system. Figs. 8A, 8B, 9 and 10 are flowcharts each showing an operation by the storage system. Figs. 11A to 11C are views each showing an aspect of return of data in the storage system.

This exemplary embodiment shows a specific example of a storage system disclosed in a second exemplary embodiment described later. Below, a case of configuring the storage system by connecting a plurality of server computers will be described. However, the storage system of the present invention is not limited to being configured by a plurality of computers, and may be configured by one computer.

### [Configuration]

As shown in Fig. 2, a storage system 10 of the present invention is connected to a backup system 11 that controls a backup process via a network N. The backup system 11 acquires backup target data (storage target data) stored in a backup target device 12 connected via the network N, and requests the storage system 10 to store. Thus, the storage system 10 stores the backup target data requested to be stored as a backup.

As shown in Fig. 3, the storage system 10 of this exemplary embodiment is configured by connecting a plurality of server computers. To be specific, the storage system 10 is equipped with an accelerator node 10A serving as a server computer that controls a storing and reproducing operation by the storage system 10, and a storage node 10B serving as a server computer equipped with a storage device that stores data. The number of the accelerator nodes 10A and the number of the storage nodes 10B are not limited to those shown in Fig. 3, and the storage system may be configured by connecting more nodes 10A and more nodes 10B.

Furthermore, the storage system 10 of this exemplary embodiment is a content address storage system that divides data and makes the data redundant, distributes and stores the data into a plurality of storage devices, and specifies a storing position in which the data is stored by a unique content address specified in accordance with the content of the data. This content address storage system will be described later in detail.

In Fig. 4, a configuration of the storage system 10 is shown. As shown in this drawing, firstly, the accelerator node 10A configuring the storage system 10 is equipped with a data-division and redundant-data-provision unit 21 and a component and node information monitoring unit 22, which are configured by installation of a program into a plurality of arithmetic devices like a CPU (Central Processing Unit) included therein. Moreover, the accelerator node 10A is equipped with a mapping table 23 and a node list 24 within a storage device included therein.

Further, the storage node 10B configuring the storage system 10 is equipped with a component moving unit 31 and a data-movement and data-regeneration unit 32, which are configured by installation of a program into a plurality of arithmetic devices like a CPU (Central Processing Unit) included therein. Moreover, the storage node 10B is equipped with a component 33 within a storage device included therein. Below, the respective configurations will be described in detail.

The abovementioned program is provided to the accelerator node 10A and the storage node 10B, for example, in a state stored in a storage medium such as a CD-ROM. Alternatively, the program may be stored in a storage device of another server computer on the network and provided from the other server computer to the accelerator node 10A and the storage node 10B via the network.

Further, the configurations included by the accelerator node 10A and the storage node 10B are not necessarily limited to the configurations shown in Fig. 4. In other words, the respective configurations may be included by either node. Moreover, the respective configurations may be included by one computer.

Firstly, the data-division and redundant-data-provision unit 21 divides backup target data (storage target data) into a plurality of fragment data in order to distribute and store the backup target data. An example of this process is shown in Figs. 5 and 6. To be specific, firstly upon acceptance of an input of backup target data A (arrow Y1), as shown in Fig. 5 and shown by arrow Y2 in Fig. 6, the data-division and redundant-data-provision unit 21 divides the backup target data A into block data D having predetermined capacities (e.g., 64 KB). Then, based on the data content of the block data D, the data-division and redundant-data-provision unit 21 calculates a unique hash value H representing the data content (arrow Y3). For example, a hash value H is calculated from the data content of block data D by a preset hash function. This hash value H is used for eliminating duplicate recording of data having the same content and for generating a content address representing a storing location of data, but a detailed explanation thereof will be omitted.

Further, the data-division and redundant-data-provision unit 21 divides the block data D into a plurality of fragment data having predetermined capacities. For example, the data-division and redundant-data-provision unit 21 divides the block data D into nine fragment data (division data 41) as shown by symbols D1 to D9 in Fig. 5. Furthermore, the data-division and redundant-data-provision unit 21 generates redundant data so that the original block data can be restored even when some of the fragment data obtained by division are lost, and adds to the fragment data 41 obtained by division. For example, the data-division and redundant-data-provision unit 21 adds three fragment data (redundant data 42) as shown by symbols D10 to D12. Thus, the data-division and redundant-data-provision unit 21 generates a data set 40 including twelve fragment data composed of the nine division data 41 and the three redundant data (arrow Y4 in Fig. 6).

Then, the fragment data generated as described above are distributed and stored into the components 33 formed in the respective storage nodes 10B via a switch 10C, respectively, by the component moving units 31 of the respective storage nodes 10B described later (a distribution storage processing means). For example, in the case of generating the twelve fragment data D1 to D12 as shown in Fig. 5, the fragment data D1 to D12 are stored one by one into the components 33 serving as data storing regions formed in the twelve storage nodes 10B (refer to arrow Y5 in Fig. 6). The distribution storing process described above may be executed by a function included in the accelerator node 10A.

When the fragment data are stored as described above, a content address CA representing the storing positions of the fragment data D1 to D12, namely, the storing position of the block data D restored from the fragment data D1 to D12 is generated in the storage node 10B. At this moment, the content address CA is generated, for example, by combining part of the hash value H calculated based on the stored block data D (a short hash: e.g., the beginning 8 B (bytes) of the hash value H) and information representing a logical storing position. Then, this content address CA is returned to the accelerator node 10A managing a file system within the storage system 10 (arrow Y6 in Fig. 6), and identification information such as a file name of the backup target data and the content address CA are related with each other and managed in the file system.

Thus, upon acceptance of a request for retrieving a file, the storage system can specify a storing position designated by a content address CA corresponding to the requested file and retrieve each fragment data stored in this specified storing position as data requested to be retrieved. As described above, the storage system has a function of retrieving and writing data (a data processing means).

Further, the component and node information monitoring unit 22 (a data location monitoring means) manages the fragment data stored in the respective storage nodes 10B by the component, which stores the fragment data. To be specific, as described later, the component and node information monitoring unit 22 monitors the movement of the component autonomously executed by the storage node 10B, and acquires component location information representing the location of the component at predetermined time intervals (every x minutes). When component location information indicates a steady state for a preset time or more (y minutes or more), the component and node information monitoring unit 22 stores the component location information including the storage node name and the component name related to each other into the mapping table 23. In other words, the component and node information monitoring unit 22 updates the mapping table 23.

Further, the component and node information monitoring unit 22 monitors the storage nodes 10B normally operating and participating in the storage system and stores node information representing a list thereof as a node list 24 (a storing means list). In other words, the component and node information monitoring unit 22 monitors whether or not the storage node 10B is down, for example, the storage node 10B is stopping or is not participating in the system, and stores a list of the storage nodes 10B that are not down. To be specific, the component and node information monitoring unit 22 executes monitoring of the storage node 10B together with monitoring of the location of the components at predetermined time intervals (every x minutes). As a result of the monitoring, in a case that the location of the components and the list of the storage nodes keep steady without change for a predetermined time or more (y minutes or more), the component and node information monitoring unit 22 re-stores component location information and node information in that state into the mapping table and the node list, respectively.

On the other hand, in a case that there is no change of node information with respect to the node list though component location information has changed as a result of the monitoring, the component and node information monitoring unit 22 determines that a node fault is temporal and the storage node 10B has restored. In this case, the component and node information monitoring unit 22 gives, to the respective storage nodes 10B, an instruction to return location of the component so that the component location information stored in the mapping table 23 agrees with the location of the component located in the storage node 10B actually. The component and node information monitoring unit 22 functions as a data location returning means in cooperation with the component moving unit 31 and the data-movement and data-regeneration unit 32 of the storage node 10B described later.

Next, a configuration of the storage node 10b will be described. Firstly, the storage nodes 10B each form the component 33 that is the unit of a data storing region, and store the fragment data D1 to D12, respectively, as described later.

Further, the component moving unit 31 has a function of distributedly storing the respective fragment data transmitted via the switch 10C as described above in cooperation with the other storage nodes 10B, and also has a function of balancing load among the storage nodes 10B. To be specific, the load balancing function monitors the state of load of each of the storage nodes 10B and, for example, at the time of storing fragment data and at the time of adding or deleting the storage node 10B, moves the component 33 in accordance with a load balance among the storage nodes 10B. The load balancing function by the component moving unit 31 is autonomously executed by each of the storage nodes 10B. For example, when the storage node 10B is down and deleted because of a fault or the like, the component stored in the down storage node 10B is moved so as to be generated in the other storage node 10B. Moreover, for example, when the storage node 10B is newly added, or recovers from a fault and is added, the component stored in the existing storage node 10B is moved to the added storage node 10B.

Then, specifically, upon acceptance of an instruction to return the location of the component from the component and node information monitoring unit 22 described above, the component moving unit 31 moves the component 33 so that the actual location of the component agrees with component location information stored in the mapping table 23.

Further, the data-movement and data-regeneration unit 32 executes movement of data or regeneration of data so as to store the data into the component in accordance with the component moved by the component moving unit 31 described above. To be specific, firstly, the data-movement and data-regeneration unit 32 checks by data belonging to the component whether the data exists in a storage node to which the component is to be moved. In a case that the data exists, the data-movement and data-regeneration unit 32 relates the data with the component moved by the component moving unit 31. On the other hand, in a case that the data does not exist in the destination storage node, the data-movement and data-regeneration unit 32 subsequently checks whether the data exists in a source storage node. At this moment, in a case that the data exists in the source storage node, the data-movement and data-regeneration unit 32 moves the data to the destination storage node, from the source storage node. On the other hand, in a case that the data does not exist in either the destination storage node or the source storage node, the data-movement and data-regeneration unit 32 regenerates the data from the redundant data.

As described above, the component moving unit 31 and the data-movement and data-regeneration unit 32, in cooperation with the component and node information monitoring unit 22, function as a data restoring means for restoring data stored in a deleted storage node 10B into another storage node 10B and also function as a data location returning means for returning data location in the storage node 10B having recovered.

### [Operation]

Next, an operation of the storage system configured as described above will be described with reference to the flowcharts of Figs. 8 and 9 and Fig. 12.

First, the data-division and redundant-data-provision unit 21 of the accelerator node 10A divides storage target data into any number of pieces, and adds a plurality of redundant data thereto, thereby forming a plurality of fragment data (step S1 in Fig. 8A). Then, the component moving units 31 of the respective storage nodes 10B move components and store the fragment data into the respective storage nodes 10B via the switch 10C so as to distribute the load of the respective storage nodes 10B (step S2 in Fig. 8B). For example, as shown in Fig. 11A, components a, b, c and d that store data a, b, c and d, respectively, are located in storage nodes A, B, C and D. This component moving process by load balancing is autonomously executed among the storage nodes 10B constantly.

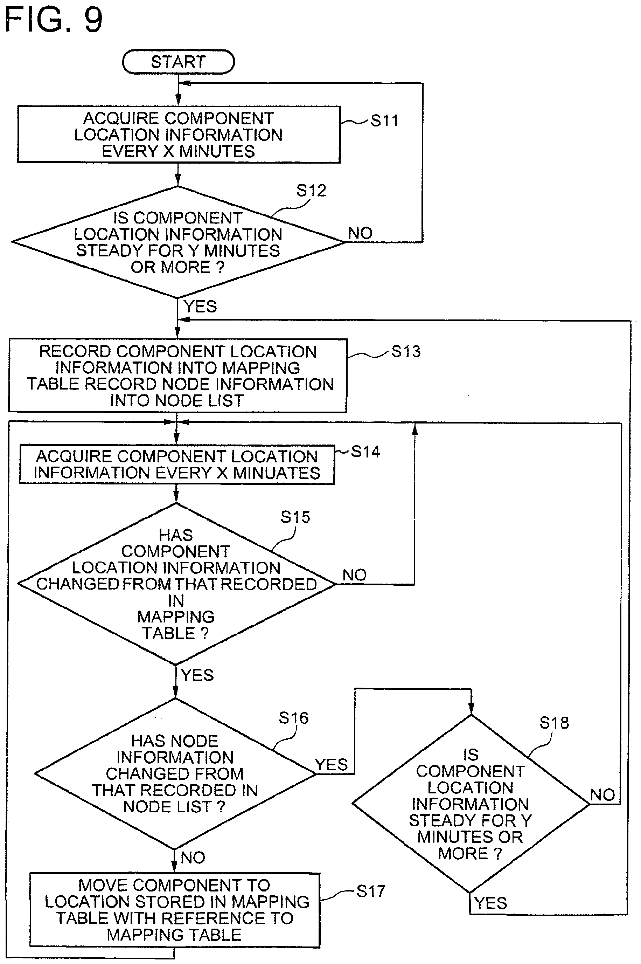

Subsequently, an operation of the component and node information monitoring unit 22 of the accelerator 10A will be described with reference to Fig. 9. Firstly, in the initial state of the system, the component and node information monitoring unit 22 acquires component location information at regular intervals (every x minutes) (step S11). At this moment, in a case that the component location information is steady for y minutes or more ("Yes" at step S12), the component and node information monitoring unit 22 stores the location information at that moment into the mapping table 23, and also records node information into the node list 24 (step S13). After that, the accelerator node 10A still monitors component location information at regular intervals (every x minutes) (step S 14).

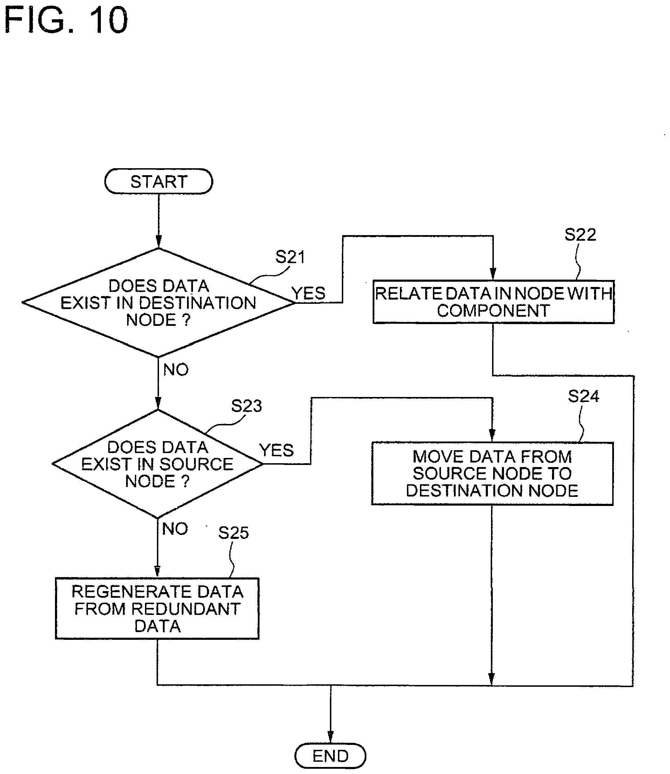

It is assumed that the storage node 10B is down because of a fault of the storage node 10B, etc. In other words, it is assumed that component location information being monitored and node information change with respect to the mapping table 23 and the node list 24 ("Yes" at step S 15 and "Yes" at step S16). As a specific example, it is assumed that the storage nodes A and B are down as shown in Fig. 11B. Then, by a load balancing process, the components a and b stored in the storage nodes A and B respectively move to the storage nodes C and D. That is to say, the components a and c are located in the storage node C, and the components b and d are located in the storage node D. The components a and b moved from the storage nodes A and B to the storage nodes C and D are regenerated by using the other components stored in the other storage nodes, respectively. The regeneration will be described later with reference to Fig. 10.

Then, in a case that the storage nodes remain down and, while the component location information being monitored and the node information remain changed with respect to the mapping table 23 and the node list 24 ("Yes" at step S 15 and "Yes" at step S16), keep steady for y minutes or more ("Yes" at step S18), the component and node information monitoring unit 22 re-stores the component location information and node information in that state into the mapping table and the node list (step S13).

On the other hand, in a case that component location information changes because of a storage node fault, etc., as described above ("Yes" at step S 15) and load balancing is autonomously executed as shown in Fig. 11B but the storage node fault is temporal and the storage node recovers within y minutes, there is no change in node information ("No" at step S16). In this case, the changed component location information is not stored. For example, in a case that the nodes A and B are brought into the state shown in Fig. 11B and thereafter recover immediately, the component location information of the state shown in Fig. 11A is being stored in the mapping table. In this case, with reference to the mapping table, the component location is returned to the location stored in the mapping table. Consequently, as shown in Fig. 11C, the location of the components a, b, c and d in the storage nodes A, B, C and D is returned to a state as shown in Fig. 11A, which is before occurrence of the fault.

Movement of data stored in a component in accordance with movement of the component and regeneration of data are executed by the storage node 10B as shown in Fig. 10. Firstly, the storage node 10B checks by data belonging to the component whether the data exists in a storage node to which the component is to be moved (step S21). At this moment, in a case that the component exists ("Yes" at step S21), the storage node 10B relates the data with the moved component (step S22). Recovery from the state of Fig. 11B to the state of Fig. 11C described above is executed by the process of step S22. Thus, since it is possible to return data location by using fragment data stored in the restored storage node, it is possible to inhibit regeneration and movement of unnecessary data. As a result, it is possible to realize efficient and quick data restoration in restoration of a storage node.

On the other hand, in a case that the data corresponding to the moved component does not exist in the destination storage node ("No" at step S21), the storage node 10B next checks whether the data exists in a source storage node (step S23). Then, in a case that the data exists in the source storage node, the storage node 10B moves the data from the source storage node to the destination storage node (step S24).

Furthermore, in a case that the data does not exist either in the component destination storage node or in the source storage node, the data is regenerated from redundant data. This process is executed for, when any storage node goes down, moving a component stored in the storage node to another storage node as shown in Fig. 11B.

### <Second Exemplary Embodiment>

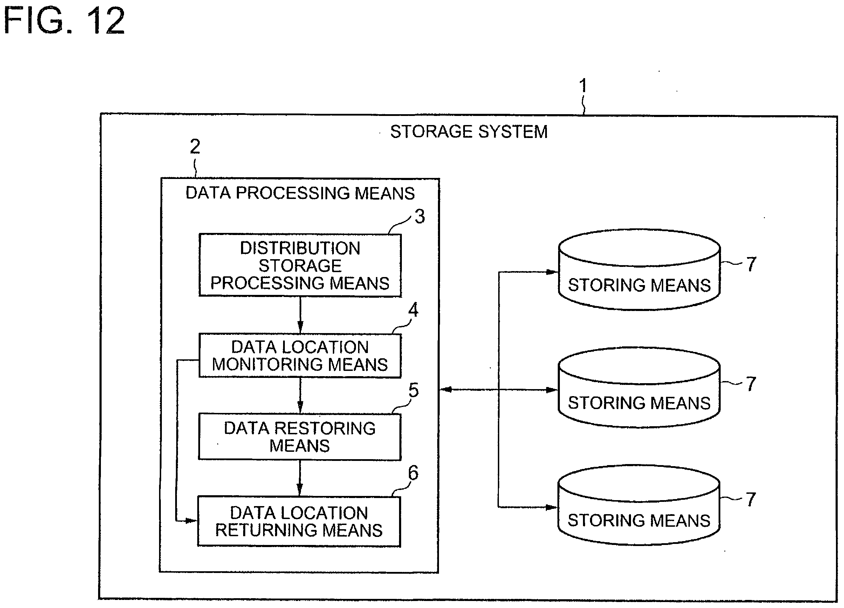

A second exemplary embodiment of the present invention will be described with reference to Fig. 12. Fig. 12 is a function block diagram showing a configuration of a storage system. In this exemplary embodiment, a basic configuration and operation of the storage system will be described.

As shown in Fig. 12, a storage system of this exemplary embodiment includes a plurality of storing means 7 and a data processing means 2 configured to store data into the plurality of storing means 7 and retrieve the data stored in the storing means.

Then, the data processing means 2 includes: a distribution storage processing means 3 configured to distribute and store a plurality of fragment data composed of division data obtained by dividing storage target data into plural pieces and redundant data for restoring the storage target data, into the plurality of storing means; a data location monitoring means 4 configured to monitor a data location status of the fragment data in the respective storing means and store data location information representing the data location status; and a data restoring means 5 configured to, when any of the storing means is down, regenerate the fragment data having been stored in the down storing means based on the fragment data stored in the storing means other than the down storing means and store into the other storing means.

Furthermore, the storage system 1 of this exemplary embodiment also includes a data location returning means 6 configured to, when the down storing means recovers, return a data location of the fragment data by using the fragment data stored in the storing means having recovered so that the data location status becomes as represented by the data location information stored by the data location monitoring means.

According to the present invention, firstly, the storage system divides storage target data into a plurality of division data, generates redundant data for restoring the storage target data, and distributes and stores a plurality of fragment data including the division data and the redundant data into a plurality of storing means. After that, the storage system monitors a data location status of the respective fragment data, and stores data location information representing the data location status.

Further, when the storing means is down because of occurrence of a fault, the storage system regenerates the fragment data having been stored in the down storing means based on the other fragment data and stores into the other storing means. After that, when the down storing means recovers, the storage system uses the fragment data stored in the storing means having recovered and returns the data location so that the data location status becomes as represented by the data location information.

Consequently, in a case that the storing means is down temporarily and then recovers, it is possible to return data location by using the stored fragment data, and therefore, it is possible to inhibit regeneration and movement of unnecessary data. Accordingly, it is possible to realize efficient and quick data restoration in recovery of the storing means.

Further, in the storage system: the data location monitoring means is configured to monitor the data location status of the fragment data by component that is a unit of data storing within the storing means; the data restoring means is configured to regenerate the component of the down storing means in the other storing means; and the data location returning means is configured to return a data location of the component in the storing means based on the data location information and return the data location of the fragment data.

Further, in the storage system, the data location returning means is configured to return the component to the storing means having recovered and, by relating the fragment data stored in the storing means having recovered with the component, return the data location of the fragment data.

Further, in the storage system, the data location returning means is configured to, in a case that the fragment data to be stored in the component returned to the storing means having recovered based on the data location information does not exist in the storing means having recovered, return the data location of the fragment data by moving the fragment data regenerated by the data restoring means from the other storing means.

Further, in the storage system: the data location monitoring means is configured to, in a case that the data location status being monitored keeps steady for a predetermined time or more, store the data location information representing the data location status; and the data location returning means is configured to, when the data location status monitored by the data location monitoring means changes with respect to the data location information and the down storing means recovers, return the data location of the fragment data.

Further, in the storage system: the data location monitoring means is configured to monitor an operation status of the storing means, and store the data location information and also store a storing means list showing the operating storing means; and the data location returning means is configured to, when the data location status monitored by the data location monitoring means changes with respect to the data location information and the operating storing means agrees with the storing means list, return the data location of the fragment data.

Further, the abovementioned storage system can be realized by installing a program in an information processing device.

To be specific, a computer program of another exemplary embodiment of the present invention includes instructions for causing an information processing device equipped with a plurality of storing means to realize a data processing means configured to store data into the plurality of storing means and retrieve the data stored in the storing means, and also realize: a distribution storage processing means configured to distribute and store a plurality of fragment data composed of division data obtained by dividing storage target data into plural pieces and redundant data for restoring the storage target data, into the plurality of storing means; a data location monitoring means configured to monitor a data location status of the fragment data in the respective storing means and store data location information representing the data location status; a data restoring means configured to, when any of the storing means is down, regenerate the fragment data having been stored in the down storing means based on the fragment data stored in the storing means other than the down storing means and store into the other storing means; and a data location returning means configured to, when the down storing means recovers, return a data location of the fragment data by using the fragment data stored in the storing means having recovered so that the data location status becomes as represented by the data location information stored by the data location monitoring means.

Then, in the computer program, the data location monitoring means is configured to monitor the data location status of the fragment data by component that is a unit of data storing within the storing means; the data restoring means is configured to regenerate the component of the down storing means in the other storing means; and the data location returning means is configured to return a data location of the component in the storing means based on the data location information and return the data location of the fragment data.

The abovementioned program is provided to the information processing device, for example, in a state stored in a storage medium such as a CD-ROM. Alternatively, the program may be stored in a storage device of another server computer on the network and provided from the other server computer to the information processing device via the network.

Further, a data processing method executed in the storage system with the above configuration includes: storing data into the plurality of storing means and retrieving the data stored in the storing means; distributing and storing a plurality of fragment data composed of division data obtained by dividing storage target data into plural pieces and redundant data for restoring the storage target data, into the plurality of storing means; monitoring a data location status of the fragment data in the respective storing means and storing data location information representing the data location status; when any of the storing means is down, regenerating the fragment data having been stored in the down storing means based on the fragment data stored in the storing means other than the down storing means and storing into the other storing means; and when the down storing means recovers, returning a data location of the fragment data by using the fragment data stored in the storing means having recovered so that the data location status becomes as represented by the data location information having been stored.

Then, the data processing method includes: when monitoring the data location status, monitoring the data location status of the fragment data by component that is a unit of data storing within the storing means; when regenerating the fragment data, regenerating the component of the down storing means in the other storing means; and when returning the data location, returning a data location of the component in the storing means based on the data location information and returning the data location of the fragment data.

A computer program and a data processing method having the abovementioned configurations have like actions as the abovementioned storage system, and therefore, can achieve the object of the present invention mentioned above.

Although the present invention has been described with reference to the respective exemplary embodiments described above, the present invention is not limited to the abovementioned exemplary embodiments. The configuration and details of the present invention can be altered within the scope of the present invention in various manners that can be understood by those skilled in the art.

### INDUSTRIAL APPLICABILITY

The present invention can be utilized for a storage system configured by connecting a plurality of computers, and has industrial applicability.

### DESCRIPTION OF REFERENCE NUMERALS

- 1: storage system
- 2: data processing means
- 3: distribution storage processing means
- 4: data location monitoring means
- 5: data restoring means
- 6: data location returning unit
- 7: storing means
- 10: storage system
- 10A: accelerator node
- 10B: storage node
- 11: backup system
- 12: backup target device
- 21: data-division and redundant-data-provision unit
- 22: component and node information storing unit
- 23: mapping table
- 24: node list
- 31: component moving unit
- 32: data-movement and data-regeneration unit
- 33: memory

## Claims

1. A storage system comprising a plurality of storing means (7) and a data processing means (2) configured to store data into the plurality of storing means (7) and retrieve the data stored in the storing means (7), wherein:
the data processing means (2) includes:
a distribution storage processing means (3) configured to distribute and store a plurality of fragment data composed of division data obtained by dividing storage target data into plural pieces and redundant data for restoring the storage target data, into the plurality of storing means (7);
a data location monitoring means (4) configured to monitor a data location of the fragment data in the respective storing means (7) and store data location information representing the data location; and
a data restoring means (5) configured to, when any of the storing means (7) is down, regenerate the fragment data having been stored in the down storing means (7) based on the fragment data stored in the storing means (7) other than the down storing means and store said regenerated fragment data into the other storing means; **characterized in that**
the data processing means (2) also includes a data location returning means (6) configured to, when the down storing means recovers, return a data location of the fragment data to the data location as represented by the data location information stored by the data location monitoring means (4), by using the fragment data stored in the storing means (7) that has recovered.

2. The storage system according to Claim 1, wherein:
the data location monitoring means (4) is configured to monitor the data location of the fragment data by component that is a unit of a region storing the fragment data within the storing means (7);
the data restoring means (5) is configured to regenerate the component of the down storing means in the other storing means; and
the data location returning means (6) is configured to return a data location of the component in the storing means (7) based on the data location information and return the data location of the fragment data to the data location as represented by the data location information stored by the data location monitoring means (4).

3. The storage system according to Claim 2, wherein the data location returning means (4) is configured to return the component to the storing means (7) having recovered and, by relating the fragment data stored in the storing means (7) having recovered with the component, return the data location of the fragment data.

4. The storage system according to Claim 3, wherein the data location returning means (6) is configured to, in a case that the fragment data to be stored in the component returned to the storing means (7) having recovered based on the data location information does not exist in the storing means (7) having recovered, return the data location of the fragment data by moving the fragment data regenerated by the data restoring means (5) from the other storing means.

5. The storage system according to any of Claims 1 to 4, wherein:
the data location monitoring means (4) is configured to, in a case that the data location being monitored keeps steady for a predetermined time or more, store the data location information representing the data location; and
the data location returning means (6) is configured to, when the data location monitored by the data location monitoring means (4) changes with respect to the data location information and the down storing means recovers, return the data location of the fragment data.

6. The storage system according to Claim 5, wherein:
the data location monitoring means (4) is configured to monitor an operation status of the storing means (7) and store the data location information and also store a storing means list showing the operating storing means; and
the data location returning means (6) is configured to, when the data location monitored by the data location monitoring means (4) changes with respect to the data location information and the operating storing means agrees with the storing means list, return the data location of the fragment data.

7. A computer program comprising instructions for causing an information processing device equipped with a plurality of storing means (7) to realize a data processing means (2) configured to store data into the plurality of storing means (7) and retrieve the data stored in the storing means (7), and also realize:
a distribution storage processing means (3) configured to distribute and store a plurality of fragment data composed of division data obtained by dividing storage target data into plural pieces and redundant data for restoring the storage target data, into the plurality of storing means (7);
a data location monitoring means (4) configured to monitor a data location of the fragment data in the respective storing means (7) and store data location information representing the data location; and
a data restoring means (5) configured to, when any of the storing means (7) is down, regenerate the fragment data having been stored in the down storing means (7) based on the fragment data stored in the storing means (7) other than the down storing means and store said regenerated fragment data into the other storing means; **characterised by**
a data location returning means (6) configured to, when the down storing means recovers, return a data location of the fragment data to the data location as represented by the data location information stored by the data location monitoring means (4), by using the fragment data stored in the storing means (7) that has recovered.

8. The computer program according to Claim 7, wherein:
the data location monitoring means (4) is configured to monitor the data location of the fragment data by component that is a unit of a region storing the fragment data within the storing means (7);
the data restoring means (5) is configured to regenerate the component of the down storing means in the other storing means; and
the data location returning means (6) is configured to return a data location of the component in the storing means (7) based on the data location information and return the data location of the fragment data to the data location as represented by the data location information stored by the data location monitoring means (4).

9. A data processing method comprising, in an information processing device equipped with a plurality of storing means (7):
storing data into the plurality of storing means (7) and retrieving the data stored in the storing means (7);
distributing and storing a plurality of fragment data composed of division data obtained by dividing storage target data into plural pieces and redundant data for restoring the storage target data, into the plurality of storing means (7);
monitoring a data location of the fragment data in the respective storing means and storing data location information representing the data location; and
when any of the storing means (7) is down, regenerating the fragment data having been stored in the down storing means based on the fragment data stored in the storing means (7) other than the down storing means and storing said regenerated fragment data into the other storing means; **characterised in that**
when the down storing means recovers, returning a data location of the fraament data to the data location as represented by the data location information having been stored, by using the fragment data stored in the storing means that has recovered.

10. The data processing method according to Claim 9, comprising:
when monitoring the data location, monitoring the data location of the fragment data by component that is a unit of a region storing the fragment data within the storing means (7);
when regenerating the fragment data, regenerating the component of the down storing means in the other storing means; and
when returning the data location, returning a data location of the component in the storing means based on the data location information and returning the data location of the fragment data to the data location as represented by the data location information.

## Patentansprüche

1. Speichersystem, das mehrere Speichereinrichtungen (7) und eine Datenverarbeitungseinrichtung (2) aufweist, das konfiguriert ist, um Daten in der Vielzahl von Speichereinrichtungen (7) zu speichern und die in den Speichereinrichtungen (7) gespeicherten Daten abzurufen, wobei:
die Datenverarbeitungseinrichtung (2) umfasst:
eine Speicherverteilungsverarbeitungseinrichtung (3), die konfiguriert ist, um eine Vielzahl von Fragmentdaten, die aus geteilten Daten bestehen, die erhalten werden, indem Speicherzieldaten in mehrere Teile geteilt werden, und redundante Daten zum Wiederherstellen der Speicherzieldaten in die mehreren Speichereinrichtungen (7) zu speichern;
eine Datenspeicherort-Überwachungseinrichtung (4), die konfiguriert ist, um einen Datenspeicherort der Fragmentdaten in den jeweiligen Speichereinrichtungen (7) zu überwachen und Datenspeicherortinformationen, die den Datenspeicherort darstellen, zu speichern; und
eine Datenwiederherstellungseinrichtung (5), die konfiguriert ist, um, wenn eine der Speichereinrichtungen (7) inaktiv ist, die Fragmentdaten, die in der inaktiven Speichereinrichtung (7) gespeichert wurden, basierend auf den Fragmentdaten, die in den Speichereinrichtungen (7) außer der inaktiven Speichereinrichtung gespeichert sind, neu zu erstellen und die neu erstellten Fragmentdaten in die anderen Speichereinrichtungen zu speichern;
**dadurch gekennzeichnet, dass**
die Datenverarbeitungseinrichtung (2) auch eine Datenspeicherortrückführungseinrichtung (6) aufweist, die konfiguriert ist, um, wenn die inaktive Speichereinrichtung sich erholt, unter Verwendung der Fragmentdaten, die in der Speichereinrichtung (7) gespeichert sind, die sich erholt hat, einen Datenspeicherort der Fragmentdaten an den Datenspeicherort rückzuführen, wie er durch die Datenspeicherortinformationen dargestellt wird, die von der Datenspeicherort-Überwachungseinrichtung (4) gespeichert sind.

2. Speichersystem nach Anspruch 1, wobei:
die Datenspeicherort-Überwachungseinrichtung (4) konfiguriert ist, um den Datenspeicherort der Fragmentdaten durch eine Komponente zu überwachen, die eine Einheit eines Bereichs ist, der die Fragmentdaten in den Speichereinrichtungen (7) speichert;
die Datenwiederherstellungseinrichtung (5) konfiguriert ist, um die Komponente der inaktiven Speichereinrichtung in den anderen Speichereinrichtungen neu zu erstellen; und
die Datenspeicherort-Rückführungseinrichtung (6) konfiguriert ist, um einen Datenspeicherort der Komponente in den Speichereinrichtungen (7) basierend auf den Datenspeicherortinformationen rückzuführen und den Datenspeicherort der Fragmentdaten an den Datenspeicherort rückzuführen, wie er durch die Datenspeicherortinformationen dargestellt wird, die von der Datenspeicherort-Überwachungseinrichtung (4) gespeichert sind.

3. Speichersystem nach Anspruch 2, wobei die Datenspeicherort-Rückführungseinrichtung (4) konfiguriert ist, um die Komponente an die Speichereinrichtung (7), die sich erholt hat, rückzuführen, und den Datenspeicherort der Fragmentdaten rückzuführen, indem die in der Speichereinrichtung (7), die sich erholt hat, gespeicherten Fragmentdaten der Komponente zugeordnet werden.

4. Speichersystem nach Anspruch 3, wobei die Datenspeicherort-Rückführungseinrichtung (6) konfiguriert ist, um in einem Fall, dass die Fragmentdaten, die in der Komponente gespeichert werden sollen, die an die Speichereinrichtung (7), die sich erholt hat, basierend auf den Datenspeicherortinformationen rückgeführt wird, in der Speichereinrichtung (7), die sich erholt hat, nicht existieren, den Datenspeicherort der Fragmentdaten durch Verschieben der Fragmentdaten, die durch die Datenwiederherstellungseinrichtung (5) wiederhergestellt wurden, von den anderen Speichereinrichtungen rückzuführen.

5. Speichersystem nach einem der Ansprüche 1 bis 4, wobei:
die Datenspeicherort-Überwachungseinrichtung (4) konfiguriert ist, um in einem Fall, dass der überwachte Datenspeicherort eine vorgegebene Zeit lang oder länger stabil bleibt, die Datenspeicherortinformationen, die den Datenspeicherort darstellen, speichert; und
die Datenspeicherort-Rückführungseinrichtung (6) konfiguriert ist, um, wenn der von der Datenspeicherort-Überwachungseinrichtung (4) überwachte Datenspeicherort sich in Bezug auf die Datenspeicherortinformationen ändert und die inaktive Speichereinrichtung sich erholt, den Datenspeicherort der Fragmentdaten rückzuführen.

6. Speichersystem nach Anspruch 5, wobei:
die Datenspeicherort-Überwachungseinrichtung (4) konfiguriert ist, um einen Betriebszustand der Speichereinrichtungen (7) zu überwachen und die Datenspeicherortinformationen zu speichern und auch die Speichereinrichtungsliste zu speichern, die die arbeitenden Speichereinrichtungen zeigt; und
die Datenspeicherort-Rückführungseinrichtung (6) konfiguriert ist, um, wenn der von der Datenspeicherort-Überwachungseinrichtung (4) überwachte Datenspeicherort sich in Bezug auf die Datenspeicherortinformationen ändert und die arbeitende Speichereinrichtung der Speichereinrichtungsliste übereinstimmt, den Datenspeicherort der Fragmentdaten rückzuführen.

7. Computerprogramm, das Anweisungen aufweist, um zu bewirken, dass eine Informationsverarbeitungsvorrichtung, die mit einer Vielzahl von Speichereinrichtungen (7) ausgestattet ist, eine Datenverarbeitungseinrichtung (2) realisiert, die konfiguriert ist, um Daten in der Vielzahl von Speichereinrichtungen (7) zu speichern und die in den Speichereinrichtungen (7) gespeicherten Daten abzurufen, und auch zu realisieren:
eine Speicherverteilungsverarbeitungseinrichtung (3), die konfiguriert ist, um eine Vielzahl von Fragmentdaten, die aus geteilten Daten bestehen, die erhalten werden, indem Speicherzieldaten in mehrere Teile geteilt werden, und redundante Daten zum Wiederherstellen der Speicherzieldaten in die mehreren Speichereinrichtungen (7) zu speichern;
eine Datenspeicherort-Überwachungseinrichtung (4), die konfiguriert ist, um einen Datenspeicherort der Fragmentdaten in den jeweiligen Speichereinrichtungen (7) zu überwachen und Datenspeicherortinformationen, die den Datenspeicherort darstellen, zu speichern; und
eine Datenwiederherstellungseinrichtung (5), die konfiguriert ist, um, wenn eine der Speichereinrichtungen (7) inaktiv ist, die Fragmentdaten, die in der inaktiven Speichereinrichtung (7) gespeichert wurden, basierend auf den Fragmentdaten, die in den Speichereinrichtungen (7) außer der inaktiven Speichereinrichtung gespeichert sind, neu zu erstellen und die neu erstellten Fragmentdaten in die anderen Speichereinrichtungen zu speichern;
**dadurch gekennzeichnet, dass**
die Datenspeicherortrückführungseinrichtung (6) konfiguriert ist, um, wenn die inaktive Speichereinrichtung sich erholt, unter Verwendung der Fragmentdaten, die in der Speichereinrichtung (7) gespeichert sind, die sich erholt hat, einen Datenspeicherort der Fragmentdaten an den Datenspeicherort rückzuführen, wie er durch die Datenspeicherortinformationen dargestellt wird, die von der Datenspeicherort-Überwachungseinrichtung (4) gespeichert sind.

8. Computerprogramm nach Anspruch 7, wobei:
die Datenspeicherort-Überwachungseinrichtung (4) konfiguriert ist, um den Datenspeicherort der Fragmentdaten durch eine Komponente zu überwachen, die eine Einheit eines Bereichs ist, der die Fragmentdaten in den Speichereinrichtungen (7) speichert;
die Datenwiederherstellungseinrichtung (5) konfiguriert ist, um die Komponente der inaktiven Speichereinrichtung in den anderen Speichereinrichtungen neu zu erstellen; und
die Datenspeicherort-Rückführungseinrichtung (6) konfiguriert ist, um einen Datenspeicherort der Komponente in den Speichereinrichtungen (7) basierend auf den Datenspeicherortinformationen rückzuführen und den Datenspeicherort der Fragmentdaten an den Datenspeicherort rückzuführen, wie er durch die Datenspeicherortinformationen dargestellt wird, die von der Datenspeicherort-Überwachungseinrichtung (4) gespeichert sind.

9. Datenverarbeitungsverfahren, das in einer Informationsspeichervorrichtung, die mit einer Vielzahl von Speichereinrichtungen (7) ausgestattet ist, aufweist:
Speichern von Daten in der Vielzahl von Speichereinrichtungen (7) und Abrufen der in den Speichereinrichtungen (7) gespeicherten Daten;
Verteilen und Speichern einer Vielzahl von Fragmentdaten, die aus geteilten Daten bestehen, die erhalten werden, indem Speicherzieldaten in mehrere Teile geteilt werden, und redundanter Daten zum Wiederherstellen der Speicherzieldaten in die mehreren Speichereinrichtungen (7);
Überwachen eines Datenspeicherorts der Fragmentdaten in den jeweiligen Speichereinrichtungen und Speichern von Datenspeicherortinformationen, die den Datenspeicherort darstellen; und
wenn eine der Speichereinrichtungen (7) inaktiv ist, Neuerstellen der Fragmentdaten, die in der inaktiven Speichereinrichtung gespeichert wurden, basierend auf den Fragmentdaten, die in den Speichereinrichtungen (7) außer der inaktiven Speichereinrichtung gespeichert sind, und Speichern der neu erstellten Fragmentdaten in den anderen Speichereinrichtungen;
**dadurch gekennzeichnet, dass**
wenn die inaktive Speichereinrichtung sich erholt, ein Datenspeicherort der Fragmentdaten unter Verwendung der Fragmentdaten, die in der Speichereinrichtung gespeichert sind, die sich erholt hat, an den Datenspeicherort, wie er durch die gespeicherten Datenspeicherortinformationen dargestellt wird, rückgeführt wird.

10. Datenverarbeitungsverfahren nach Anspruch 9, das aufweist:
wenn der Datenspeicherort überwacht wird, Überwachen des Datenspeicherorts der Fragmentdaten durch eine Komponente, die eine Einheit eines Bereichs ist, der die Fragmentdaten in den Speichereinrichtungen (7) speichert;
wenn die Fragmentdaten neu erstellt werden, Neuerstellen der Komponente der inaktiven Speichereinrichtung in den anderen Speichereinrichtungen; und
wenn der Datenspeicherort rückgeführt wird, Rückführen eines Datenspeicherorts der Komponente in den Speichereinrichtungen basierend auf den Datenspeicherortinformationen und Rückführen des Datenspeicherorts der Fragmentdaten an den Datenspeicherort, wie er durch die Datenspeicherortinformationen dargestellt wird.

## Revendications

1. Système de stockage comprenant une pluralité de moyens de stockage (7) et un moyen de traitement de données (2) configuré pour stocker des données dans la pluralité de moyens de stockage (7) et récupérer les données stockées dans les moyens de stockage (7), dans lequel :
le moyen de traitement de données (2) inclut :
un moyen de traitement de stockage de distribution (3) configuré pour distribuer et stocker une pluralité de données de fragment composées de données de division obtenues en divisant des données de cible de stockage en plusieurs éléments et de données redondantes pour restaurer les données de cible de stockage, dans la pluralité de moyens de stockage (7) ;
un moyen de surveillance d'emplacement de données (4) configuré pour surveiller un emplacement de données des données de fragment dans les moyens de stockage respectifs (7) et stocker des informations d'emplacement de données représentant l'emplacement de données ; et
un moyen de restauration de données (5) configuré pour, lorsque l'un quelconque des moyens de stockage (7) est en panne, regénérer les données de fragment qui ont été stockées dans le moyen de stockage (7) en panne sur la base des données de fragment stockées dans les moyens de stockage (7) autres que le moyen de stockage en panne et stocker lesdites données de fragment regénérées dans les autres moyens de stockage ; **caractérisé en ce que**
le moyen de traitement de données (2) inclut également un moyen de retour d'emplacement de données (6) configuré pour, lorsque le moyen de stockage en panne se rétablit, retourner un emplacement de données des données de fragment à l'emplacement de données tel que représenté par les informations d'emplacement de données stockées par le moyen de surveillance d'emplacement de données (4), en utilisant les données de fragment stockées dans le moyen de stockage (7) qui s'est rétabli.

2. Système de stockage selon la revendication 1, dans lequel :
le moyen de surveillance d'emplacement de données (4) est configuré pour surveiller l'emplacement de données des données de fragment par un composant qui est une unité d'une région stockant les données de fragment à l'intérieur des moyens de stockage (7) ;
le moyen de restauration de données (5) est configuré pour regénérer le composant du moyen de stockage en panne dans les autres moyens de stockage ; et
le moyen de retour d'emplacement de données (6) est configuré pour retourner un emplacement de données du composant dans les moyens de stockage (7) sur la base des informations d'emplacement de données et retourner l'emplacement de données des données de fragment à l'emplacement de données tel que représenté par les informations d'emplacement de données stockées par le moyen de surveillance d'emplacement de données (4).

3. Système de stockage selon la revendication 2, dans lequel le moyen de retour d'emplacement de données (4) est configuré pour retourner le composant au moyen de stockage (7) qui s'est rétabli et, en liant les données de fragment stockées dans le moyen de stockage (7) qui s'est rétabli avec le composant, retourner l'emplacement de données des données de fragment.

4. Système de stockage selon la revendication 3, dans lequel le moyen de retour d'emplacement de données (6) est configuré pour, dans un cas où les données de fragment à stocker dans le composant retourné au moyen de stockage (7) qui s'est rétabli sur la base des informations d'emplacement de données n'existent pas dans le moyen de stockage (7) qui s'est rétabli, retourner l'emplacement de données des données de fragment en déplaçant les données de fragment regénérées par le moyen de restauration de données (5) depuis les autres moyens de stockage.

5. Système de stockage selon l'une quelconque des revendications 1 à 4, dans lequel :
le moyen de surveillance d'emplacement de données (4) est configuré pour, dans un cas où l'emplacement de données qui est surveillé reste stable pendant une durée prédéterminée ou plus, stocker les informations d'emplacement de données représentant l'emplacement de données ; et
le moyen de retour d'emplacement de données (6) est configuré pour, lorsque l'emplacement de données surveillé par le moyen de surveillance d'emplacement de données (4) change par rapport aux informations d'emplacement de données et que le moyen de stockage en panne se rétablit, retourner l'emplacement de données des données de fragment.

6. Système de stockage selon la revendication 5, dans lequel :
le moyen de surveillance d'emplacement de données (4) est configuré pour surveiller un état de fonctionnement des moyens de stockage (7), et stocker les informations d'emplacement de données et stocker également une liste de moyens de stockage montrant les moyens de stockage fonctionnant ; et
le moyen de retour d'emplacement de données (6) est configuré pour, lorsque l'emplacement de données surveillé par le moyen de surveillance d'emplacement de données (4) change par rapport aux informations d'emplacement de données et que le moyen de stockage fonctionnant concorde avec la liste de moyens de stockage, retourner l'emplacement de données des données de fragment.

7. Programme informatique comprenant des instructions pour amener un dispositif de traitement d'informations équipé d'une pluralité de moyens de stockage (7) à réaliser un moyen de traitement de données (2) configuré pour stocker des données dans la pluralité de moyens de stockage (7) et récupérer les données stockées dans les moyens de stockage (7), et réaliser également :
un moyen de traitement de stockage de distribution (3) configuré pour distribuer et stocker une pluralité de données de fragment composées de données de division obtenues en divisant des données de cible de stockage en plusieurs éléments et de données redondantes pour restaurer les données dé cible de stockage, dans la pluralité de moyens de stockage (7) ;
un moyen de surveillance d'emplacement de données (4) configuré pour surveiller un emplacement de données des données de fragment dans les moyens de stockage respectifs (7) et stocker des informations d'emplacement de données représentant l'emplacement de données ; et
un moyen de restauration de données (5) configuré pour, lorsque l'un quelconque des moyens de stockage (7) est en panne, regénérer les données de fragment qui ont été stockées dans le moyen de stockage (7) en panne sur la base des données de fragment stockées dans les moyens de stockage (7) autres que le moyen de stockage en panne et stocker lesdites données de fragment regénérées dans les autres moyens de stockage ; **caractérisé par**
un moyen de retour d'emplacement de données (6) configuré pour, lorsque le moyen de stockage en panne se rétablit, retourner un emplacement de données des données de fragment à l'emplacement de données tel que représenté par les informations d'emplacement de données stockées par le moyen de surveillance d'emplacement de données (4), en utilisant les données de fragment stockées dans le moyen de stockage (7) qui s'est rétabli.

8. Programme informatique selon la revendication 7, dans lequel :
le moyen de surveillance d'emplacement de données (4) est configuré pour surveiller l'emplacement de données des données de fragment par un composant qui est une unité d'une région stockant les données de fragment à l'intérieur des moyens de stockage (7) ;
le moyen de restauration de données (5) est configuré pour regénérer le composant du moyen de stockage en panne dans les autres moyens de stockage ; et
le moyen de retour d'emplacement de données (6) est configuré pour retourner un emplacement de données du composant dans les moyens de stockage (7) sur la base des informations d'emplacement de données et retourner l'emplacement de données des données de fragment à l'emplacement de données tel que représenté par les informations d'emplacement de données stockées par le moyen de surveillance d'emplacement de données (4).

9. Procédé de traitement de données comprenant, dans un dispositif de traitement d'informations équipé d'une pluralité de moyens de stockage (7) :
stocker des données dans la pluralité de moyens de stockage (7) et récupérer les données stockées dans les moyens de stockage (7) ;
distribuer et stocker une pluralité de données de fragment composées de données de division obtenues en divisant des données de cible de stockage en plusieurs éléments et de données redondantes pour restaurer les données de cible de stockage, dans la pluralité de moyens de stockage (7) ;
surveiller un emplacement de données des données de fragment dans les moyens de stockage respectifs et stocker des informations d'emplacement de données représentant l'emplacement de données ; et
lorsque l'un quelconque des moyens de stockage (7) est en panne, régénérer les données de fragment qui ont été stockées dans le moyen de stockage en panne sur la base des données de fragment stockées dans les moyens de stockage (7) autres que le moyen de stockage en panne et stocker lesdites données de fragment regénérées dans les autres moyens de stockage ; **caractérisé en ce que**
lorsque le moyen de stockage en panne se rétablit, retourner un emplacement de données des données de fragment à l'emplacement de données tel que représenté par les informations d'emplacement de données qui ont été stockées, en utilisant les données de fragment stockées dans le moyen de stockage qui s'est rétabli.

10. Procédé de traitement de données selon la revendication 9, comprenant :
lors de la surveillance de l'emplacement de données, surveiller l'emplacement de données des données de fragment par un composant qui est une unité d'une région stockant les données de fragment à l'intérieur des moyens de stockage (7) ;
lors de la regénération des données de fragment, régénérer le composant du moyen de stockage en panne dans les autres moyens de stockage ; et
lors du retour de l'emplacement de données, retourner un emplacement de données du composant dans les moyens de stockage sur la base des informations d'emplacement de données et retourner l'emplacement de données des données de fragment à l'emplacement de données tel que représenté par les informations d'emplacement de données.
